# EUROPEAN PATENT APPLICATION

(11) **EP 3 459 840 A1**
(43) Date of publication of application: **27.03.2019**
(21) Application number: 16904737.0
(22) Date of filing: 20.09.2016
(51) Int. Cl.: B63J 99/00, G06Q 50/00, H04L 12/24

(54) **INTEGRATED VESSEL DATA SYSTEM AND VESSEL COMPRISING SAME**

(30) Priority: 09.06.2016 KR 20160071685
(71) Applicant: Hyundai Electric & Energy Systems Co., Ltd., Jongno-gu, Seoul 03058 (KR)
(72) Inventor: PARK, Ki Soo, Ulsan 44032 (KR); KANG, Jong Gu, Ulsan 44032 (KR); CHEONG, Young Soo, Ulsan 44032 (KR); PARK, Jee Hoon, Ulsan 44032 (KR); HA, Seong Min, Ulsan 44032 (KR); LEE, Dan Bi, Ulsan 44032 (KR); SONG, Chan Ho, Ulsan 44032 (KR)
(74) Representative: Jaeger, Michael David
(86) International application number: PCT/KR2016/010485
(87) International publication number: WO 2017/213304

(57) **Abstract**

The present invention relates to a vessel data integration system and a vessel comprising same. According to the present invention, a vessel data request including a VDM path is received, and by using the received VDM path, the requested vessel data is searched from a database in which vessel data are stored. The VDM path may be an identifier hierarchically defining paths leading to each vessel data in a VDM, and each vessel data may be identified by the VDM path. Accordingly, necessary vessel data may be efficiently provided to various third-party services.

## Description

### [Technical Field]

The present disclosure relates to a vessel data integration system and a vessel comprising the same.

### [Background Art]

Vessels are categorized according to the purpose of use, the type of cargo and the method by which the cargo is loaded, and vessels may be classified into commercial vessels, specialized vessels, military vessels and fishing vessels according to the purpose of use, and may be classified into container ships, bulk carriers, tankers, chemical tankers, LPG carriers, LNG carriers and car carriers according to the type of cargo.

Various types of vessels as described above each have a great deal of sensors and devices mounted thereon to function for use that suits the purpose.

Each sensor and device are collected and processed by integration equipment and provided to a service necessary for safe navigation, and because one or more sensors and devices are made using different protocols for each manufacturer, it was not easy to collect data, and even though data is collected, there is no method for managing the collected data in an integrated manner, so there are many constraints on transfer and utilization of the collected data not only on board but also on shore.

Meanwhile, International Maritime Organization (IMO) compels the specified "Maritime navigation and radiocommunication equipment and systems" (e.g., Voyage Data Recorder (VDR), Integrated Navigation System (INS), etc.) to conform to IEC 61162 based digital interfaces. Here, International Electronical Committee (IEC) 61162 is the communication standards for communication interfaces between "Maritime navigation and radiocommunication equipment and systems", and IEC 61162 is aligned with the National Marine Electronics Association (NMEA) standard.

In contrast, equipment (e.g., Alarm Monitoring System (AMS), Bridge Maneuvering System (BMS), etc.) other than "Maritime navigation and radiocommunication equipment and systems" is not bound to conform to IEC 61162. Additionally, there is a great limitation in expressing data using the already published NMEA, and thus other industrial standards or a de facto standard is mainly selected and used.

By this reason, there is no common standard for interfacing between equipment other than "Maritime navigation and radiocommunication equipment and systems".

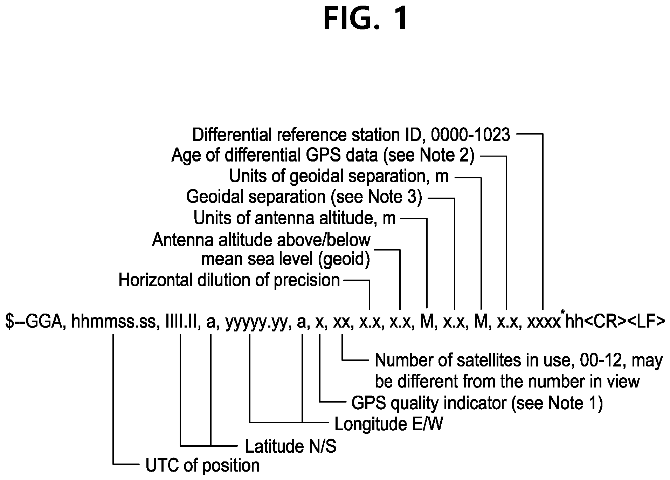

For example, the NMEA sentence structure receiving the position from Global Positioning System (GPS) is as shown in FIG. 1. The NMEA sentence is shared between system developers through a standard document, but any individual modification is not allowed.

When data to be used on the IEC 61162 standards is not data that is predefined in NMEA sentence, is it is necessary to additionally perform a task for defining the corresponding data in NMEA sentence under the mutual agreement, and share through an interface agreement document between them.

As described above, when data to be used on the IEC 61162 standards is not predefined in NMEA sentence, there is inconvenience in having to additionally define the data, write it in a document and share it.

### [Disclosure]

### [Technical Problem]

The present disclosure is designed to solve the above-described problem, and therefore the present disclosure is directed to providing a vessel data integration system for efficiently providing necessary vessel data to various third-party services based on a Vessel Data Model (VDM) that can manage vessel data in different formats made by different protocols into an integrated data format, and a vessel comprising the same.

### [Technical Solution]

To achieve the above-described object, a data service method in a vessel data integration system according to an embodiment of the present disclosure includes receiving a vessel data request including a Vessel Data Model Path (VDM Path) from a service requester, and searching for the requested vessel data from a database in which vessel data is stored, based on the VDM Path.

In the data service method in the vessel data integration system according to an embodiment of the present disclosure, the VDM Path may hierarchically define paths leading to each vessel data on a Vessel Data Model (VDM), and each vessel data may be identified by the VDM Path.

In the data service method in the vessel data integration system according to an embodiment of the present disclosure, a data range in which to perform the search may hierarchically change depending on hierarchy level of the VDM Path.

The data service method in the vessel data integration system according to an embodiment of the present disclosure may further include identifying if the service requester has an access authority for a data range specified by the VDM Path, and as a result of the identification, when the service requester has the access authority, may perform the search.

In the data service method in the vessel data integration system according to an embodiment of the present disclosure, the VDM may include a vessel model, a system model and a data model. In this case, the vessel model may define hierarchical structure in an order of vessel, equipment group, equipment and component, the system model may define hierarchical structure in an order of system, logical device and logical node for collecting vessel data, and the data model may define hierarchical structure in an order of data object about structure of vessel data and data attribute about attribute of vessel data.

In the data service method in the vessel data integration system according to an embodiment of the present disclosure, the VDM Path may include at least one name of equipment group, equipment, component, logical device, logical node, data object and data attribute.

In the data service method in the vessel data integration system according to an embodiment of the present disclosure, the VDM Path may have a sequential arrangement of at least one name of equipment group, equipment, component, logical device, logical node, data object and data attribute.

The data service method in the vessel data integration system according to an embodiment of the present disclosure may further include providing the found vessel data to the service requester in response to the vessel data request.

In the data service method in the vessel data integration system according to an embodiment of the present disclosure, the searching may include, in case of the vessel data request using a Query Application Programming Interface (API), extracting the requested vessel data by a Pull method, and in case of the vessel data request using a Push API, receiving the requested vessel data by a Push method.

Meanwhile, a data service device in a vessel data integration system according to an embodiment of the present disclosure includes a communication unit to receive a vessel data request including a Vessel Data Model Path (VDM Path) from a service requester, and a search unit to search for the requested vessel data from a database in which vessel data is stored, based on the VDM Path.

In the data service device in the vessel data integration system according to an embodiment of the present disclosure, the VDM Path may hierarchically define paths leading to each vessel data on a Vessel Data Model (VDM), and each vessel data may be identified by the VDM Path.

In the data service device in the vessel data integration system according to an embodiment of the present disclosure, the search unit may hierarchically change a data range in which to perform the search, depending on hierarchy level of the VDM Path.

The data service device in the vessel data integration system according to an embodiment of the present disclosure may further include an identification unit to identify if the service requester has an access authority for a data range specified by the VDM Path, and as a result of the identification by the identification unit, when the service requester has the access authority, may perform the searching operation by the search unit.

### [Advantageous Effects]

According to the vessel data integration system of the present disclosure and the vessel comprising the same, necessary vessel data may be efficiently provided to various third-party services.

### [Description of Drawings]

FIG. 1 is an exemplary diagram showing the conventional NMEA sentence structure.
FIG. 2 is a schematic diagram showing the structure system of VDM applied to the present disclosure.
FIG. 3 is a schematic diagram showing the configuration of a smart ship with a vessel data integration platform according to an embodiment of the present disclosure.
FIG. 4 is a schematic diagram showing the main functions of a vessel data integration platform according to an embodiment of the present disclosure.
FIG. 5 is a schematic diagram showing the configuration of a vessel data integration system including a data service device according to an embodiment of the present disclosure.
FIGS. 6 to 8 are diagrams illustrating VDM Path according to an embodiment of the present disclosure.
FIG. 9 is a diagram illustrating a process of registration and authentication of a developed third-party service in a vessel data integration system according to an embodiment of the present disclosure.
FIG. 10 is a processing diagram illustrating a vessel data service method in a vessel data integration system according to an embodiment of the present disclosure.

### [Best Mode]

In describing the embodiments of the specification, when a certain detailed description of relevant known elements or functions is deemed to render the subject matter of the present specification vague, the detailed description may be omitted herein.

The terms "comprises" and "comprising" as used herein specify the presence of stated functions, operations and elements, but do not preclude the presence or addition of one or more other functions, operations and elements. Additionally, it should be understood that the term "comprises" or "includes" when used in this specification specifies the presence of stated features, figures, steps, operation, elements, components or groups thereof, but does not preclude the presence or addition of one or more other features, figures, steps, operation, elements, components or groups thereof. As used herein, the singular forms are intended to include the plural forms as well, unless the context clearly indicates otherwise.

The key terms as used herein are defined as follows.

Vessel data integration platform (VDIP) is for collecting, processing, analyzing, storing and transmitting various vessel data, and refers to any system including software, firmware and hardware devices that manage vessel data in an integrated manner or their selective combinations, or may be used in software sense.

In an embodiment of the present disclosure, VDIP and a vessel data integration system may be used in the equivalent sense.

Vessel data model (VDM) is a data model for defining all data associated with the vessel into one system, and objectifies all devices ranging from the vessel itself to an end sensor and defines a relationship between objects and attributes of objects.

Vessel data model configuration description Language (VCL) is the language used to write a vessel data model configuration description file for describing VDM.

Vessel data model configuration description file is a configuration file that describes VDM in VCL.

Mapping configuration description file is a file that defines a rule for converting equipment output data into VDM based integrated vessel data.

Mapping is a process of connecting equipment output data to VDM.

Equipment is mounted in the vessel for special purposes, and collects various types of vessel data generated in the vessel and transmits the collected vessel data to VDIP. Equipment may be divided into first equipment with a vessel data conversion device mounted thereon, and second equipment with no vessel data conversion device.

The first equipment is where a vessel data conversion device is directly mounted, and extracts Key that can identify vessel data and Value that is the content of vessel data by parsing the collected vessel data in various formats, converts the extracted Key and Value (Key:Value) into a VDM based integrated vessel data format (VDM Path:Value) through the vessel data conversion device, and transmits the converted integrated vessel data to VDIP.

Additionally, the Key-Value is related with the data representation format, and Name-Value, Field-Value or Attribute-Value may be applied as a similar representation method. Accordingly, instead of Key, Name, Field or Attribute may be extracted.

The second equipment converts vessel data collected in various formats into a standardized format (e.g., National Marine Electronics Association (NMEA) format), and transmits it to VDIP using the User Datagram Protocol (UDP) or in the form of a file.

The first vessel data conversion device converts first vessel data in "Key:Value" format outputted from the first equipment into a VDM based integrated vessel data format (VDM Path:Value) through a mapping operation and transmits it to VDIP.

The second vessel data conversion device extracts Key and Value by parsing second vessel data received from the second equipment, and converts the extracted Key and Value (Key:Value) into a VDM based integrated vessel data format (VDM Path:Value) through a mapping operation.

Raw data is data in various formats collected by equipment from sensors or devices.

Equipment output data is data in a particular format transmitted from equipment to the vessel data conversion device, and data outputted from the first equipment may be in Key and Value (Key:Value) format, and data outputted from the second equipment may be in a standardized format (e.g., NMEA format).

Hereinafter, the embodiments of the present disclosure will be described in detail with reference to the accompanying drawings.

First, to realize the embodiments of the present disclosure, a Vessel Data Model (VDM) is established to manage all formats of data generated in the vessel into one system.

VDM largely has three conceptual categories, and the three concepts are vessel data standardization principle (Principle), Language and Common Data Structure.

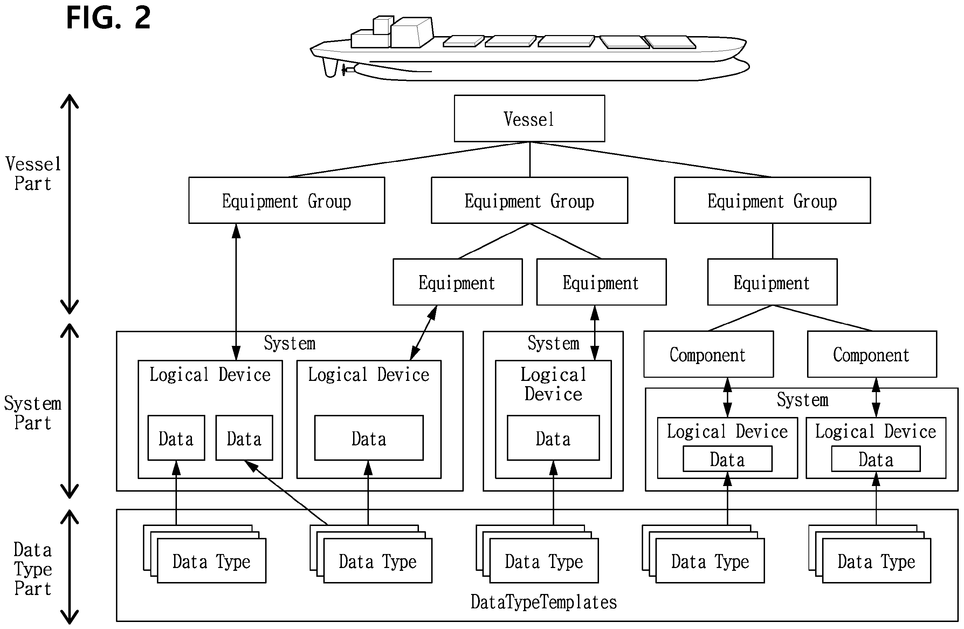

To represent vessel data, VDM defines a combination of three models, Vessel Model of modeling Vessel Part, System Model of modeling System Part, and Data Model of modeling Data Type Part as shown in FIG. 2.

The vessel model is a hierarchical classification system of equipment that constitutes the vessel, and is an entire set of equipment that can be defined for each level, and the entire set can be extended.

As shown in Table 1, the vessel model may be defined as four levels.

**[Table 1]**

| Level | Name | Description | Remarks |
|---|---|---|---|
| Level 1 | Vessel | Vessel. Top-level element | |
| Level 2 | Equipment Group | Conceptual group of equipment | |
| Level 3 | Equipment | Real equipment or abstract/logical equipment | |
| Level 4 | Component | Subdivision of Equipment | optional |

As shown in FIG. 2, Vessel has one or more Equipment Groups, each Equipment Group has 0 or more Equipment, and each Equipment has 0 or more Component.

Here, the highest level, Level 1, is Vessel that signifies the vessel itself. Vessel includes an IMO number corresponding to a unique ID that identifies the vessel.

Instances of Level 2, Equipment Group level, make up one Vessel. Here, Equipment Group is subordinate to Vessel.

Level 2, Equipment Group, is a conceptual group of Level 3, Equipment, and may use the group name widely used for classification in the shipbuilding industry. For example, classification into Machinery, Hull, Electrical, and Navigational may be used.

Level 3, Equipment, is a level that mainly represents real equipment, and has the largest number of available items and instances in real equipment.

The Equipment level is not limited to only real equipment, and may represent abstract or logical equipment. For example, not only real physical equipment such as engines or boilers, but also abstract/logical concept such as stability indication and loading status may be applied.

Level 4, Component, is an optional level used when subdividing Equipment into smaller parts, and is used when classification and reuse is needed due to independency of Component itself or when the scale of Equipment itself is large. For example, in the case of the engine, many cylinders, auxiliary machines and piping systems form a huge integrated system, so when each is subdivided into components and defined, making it possible to classify under necessary viewpoints and separately use.

The entire vessel model set described above can be continuously extended.

Meanwhile, the system model is a structured logical model for data generated from the equipment that constitutes the vessel.

Mechanical, electrical, hydraulic, pneumatic, electronic, communication or software (S/W) equipment exists together in the vessel, and data generated from the equipment is collected by devices (Information Technology (IT), electronic and S/W equipment) capable of collecting data.

The system model is used to define an internal data model for data that can be collected in the individual data collection devices (equipment).

The system model increases the reusability of the data model and manages the variability in the data collection device. For example, the data collection device, equipment A, is a device that collects data related to the engine and the piping system, the device's own logical model for the engine and the piping system may be established in the device. Additionally, when the data collection device, equipment B, is a device that mainly collects data related to navigation, a logical model mainly about navigation data will be established. In case that equipment B needs to collect some of the data of equipment A in the future, it is possible to reuse the model in such a way that equipment B may import and use the logical model of equipment A.

As shown in Table 2, the system model may be defined as four levels.

**[Table 2]**

| Level | Name | Description | Remarks |
|---|---|---|---|
| Level 1 | System | System | |
| Level 2 | Logical Device | Top-level logical equipment modeling | |
| Level 3 | Logical Node | Basic unit of logical function | |
| Level 4 | Data Object | Instance of data type | |

System has one or more Logical Devices, each Logical Device has one or more Logical Nodes, and each Logical Node has one or more Data Objects.

Level 1, System level, represents a data collection device (equipment), and includes one or multiple logical devices.

Level 2, Logical Device level, is the highest-level concept of logical equipment modeling, and includes one or multiple logical nodes.

Logical Device may include, for example, models of main engine, generator engine, boiler, tank and positioning device defined in System, and may be a model of concept of their combination.

Level 3, Logical Node level, includes objects that are created by modeling the function units of the vessel domain, and is the most fundamental level of VDM. Logical Node may include the following three elements.
- Prefix: prefix (optional) that defines Logical Node according to the purpose or use of Logical Node
- Class: indicates the type or category of Logical Node
- Inst: number necessary when indicating multiple objects

The Logical Node name (LNName) of is defined as <prefix>+<class>+<inst>, and this combination should be unique within a logical device to which the corresponding logical node belongs. For example, three pumps used in Central CFW system may be modeled using a predefined Pump Class, and each may be referred to as CentralCFWPump1, CentralCFWPump2 and CentralCFWPump3 so that they can be distinguished from other pumps using the prefix CentralCFW. If there is no overlap, CentralCFW may be omitted, and each may be defined as Pump1, Pump2 and Pump3.

Class of Logical Node is the key element of standardization that encourages to predefine and use the objects of the essential function units of the vessel domain.

Level 4, Data Object level, is the most basic unit of data configuration, and objectifies and defines Data Class of Data Model.

Meanwhile, the data model provides the means for creating a desired data object by providing a method that can define not only a basic data type, but also their combination, or a composite data type.

When the system model is a structured logical model for data generated from equipment that constitutes the vessel, the data model is a model that represents the generated data itself, and the data type may be defined by recursive structurization. The data model increases the reusability of the data type and manages the variability.

This data model may include the following elements.
- Data Class
- Data Attribute
- Recursion of Data Attribute (optional)
- Basic Data Type

Data Object of the system model assigns an ID to objectify and define Data Class of the data model.

Data Class is a data type in which data attributes are grouped into a meaningful combination.

Data Attribute is the most basic unit of the data model and can be recursively defined, and finally, has one of basic data types (Float, Timestamp, String, ...) as a type.

As described above, VDM includes a vessel model, a system model and a data model, and these three models are combined to form a VDM.

The basic principle of a combination model that combines the three models described above is as follows.
- Vessel model systematically classifies and hierarchically divides the vessel.
- System model defines a logical node of logical equipment in a particular system.
- Data model defines data class of data object of system model.
- Instance of equipment or component level of vessel model may be connected with logical node of system model.
- Connection information for connecting vessel model with logical node of system model may be set.
- Connection information indicates system and logical device for connection of an only logical node.
- Data object of system model objectifies data class of data model.

Each instance (object) defined by VDM as noted above is assigned with an object identifier for uniquely identifying each instance (object), and data attribute is defined.

VDM refers to the object identifier as VDM Path. That is, the VDM Path is used as a unique identifier for particular data in the vessel. Additionally, the VDM Path may be used as a routing rule for indicating particular vessel data on VDM.

For example, the rule of the VDM Path is as follows.

```
       <VDM Path> = <Equipment Group Name> / <Equipment Name> /
 <Component Name> / <Logical Device Name> / <Logical Node Name>.<Data Object
 Name>.[<Data Attribute Name>]+
```

Here, <Logical Node Name> is composed of <prefix>+<class>+<inst>, and + following [<Data Attribute Name>] represents one or more repetitions.

| Vessel Model | | | System Model | | | | | Data Model |
|---|---|---|---|---|---|---|---|---|
| Equipment Group Name | Equipment Name | Component Name | Logical Device Name | Logical Node Name | | | Data Object Name | Data Attribute Name |
| | | | | Prefix | Class | Instance | | |

The VDM Path of this rule may or may not include the prefix of equipment and component of the vessel model and logical device and logical node of the system model if necessary.

The data attribute defines attributes that data of a corresponding instance should have.

As described above, vessel data summarized by VDM should be described in the form that can be understood by both the system and the interest parties, and to this end, VCL is defined.

VCL is the language used to write a vessel data model configuration description file for describing VDM, and VCL is not limited to a particular type and may use all languages satisfying the following specification as VCL.
- It is possible to describe all elements of vessel model, system model, data model.
- It is possible to set the values of attributes that each element has, and extend the attributes.
- It is possible to describe the combination model.

In an embodiment of the present disclosure, it is possible to write a vessel data model configuration description file (e.g., VDM Configuration XML) based on VCL using XML (eXtensible Markup Language) Schema Definition (XSD) as VCL satisfying the above-described specification.

The vessel data model configuration description file is a configuration file that describes VDM in VCL, and includes the definition of Vessel Part, System Part and Data Type Part.

Accordingly, it is possible to extract VDM from a vessel data model configuration description file that describes VDM in VCL, and extract VDM Path and data attributes from the extracted VDM.

Hereinafter, the vessel data integration platform (VDIP) for managing (collecting, storing, providing) vessel data in various formats made by different protocols in an integrated manner based on VDM will be described.

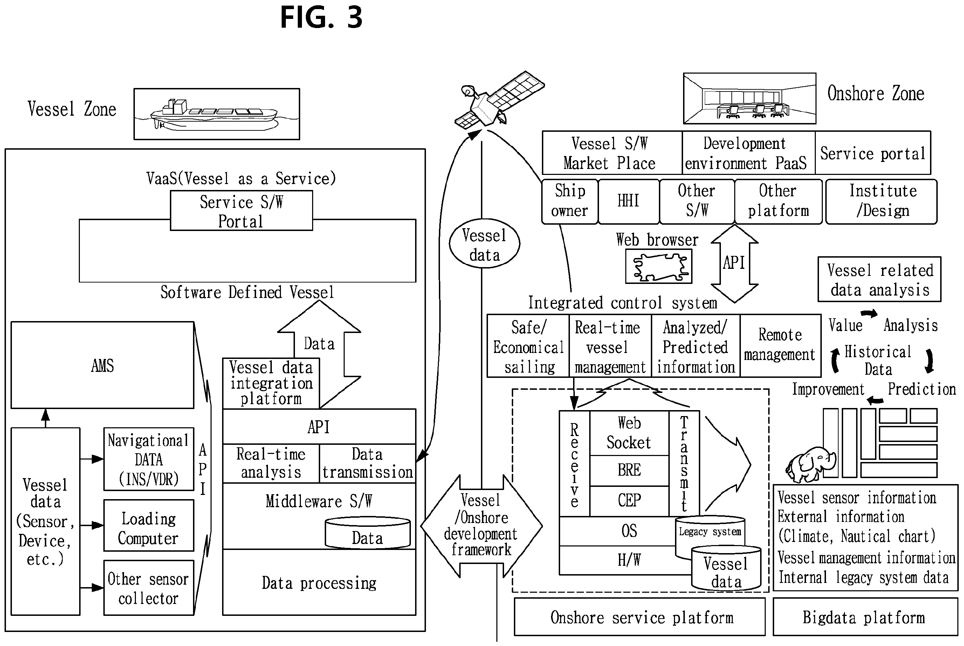

FIG. 3 is a schematic diagram showing the configuration of a smart ship with the vessel data integration platform according to an embodiment of the present disclosure.

In FIG. 3, VDIP performs collection of various types of data in the vessel into a standardized system, processing and analysis, storage, onshore transmission and other onboard S/W data service.

Onshore service platform receives data transmitted from the vessel and stores it on the shore, and provides an overall service based on it.

Bigdata platform extracts and analyzes value of data by data analysis of navigation information stored on the shore if necessary.

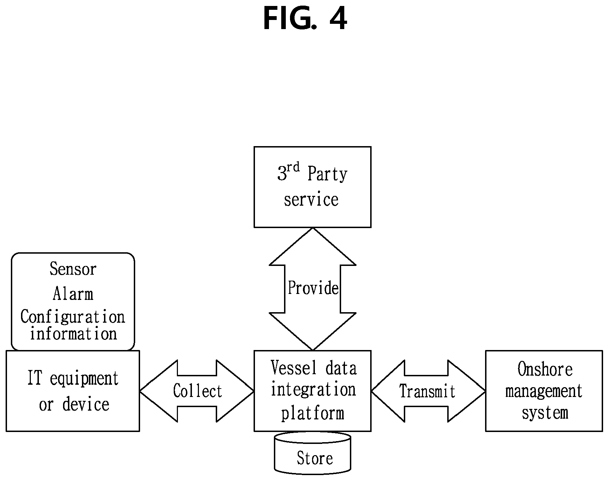

FIG. 4 is a schematic diagram showing the main functions of the vessel data integration platform according to an embodiment of the present disclosure.

VDIP converts vessel data (raw data) collected from IT equipment or devices, such as alarm data, sensor data and configuration data, into a systematized format based on VDM.

Additionally, the VDM based integrated vessel data converted into a systematized format is transmitted to an onshore management system, or provided to a third-party service.

Here, the onshore management system may be a concept corresponding to the onshore service platform of FIG. 3.

Among vessel data collected from IT equipment or devices as described above, sensor data is a real value generated from the sensor installed in the vessel, alarm data is a value representing various type of warning signals generated in the vessel, and configuration data is configuration information for each sensor, for example, the unit (e.g., m, cm, °C, °, etc.) of the numerical value used in sensor data and the minimum value (Min)/maximum value (Max) of the numeric value.

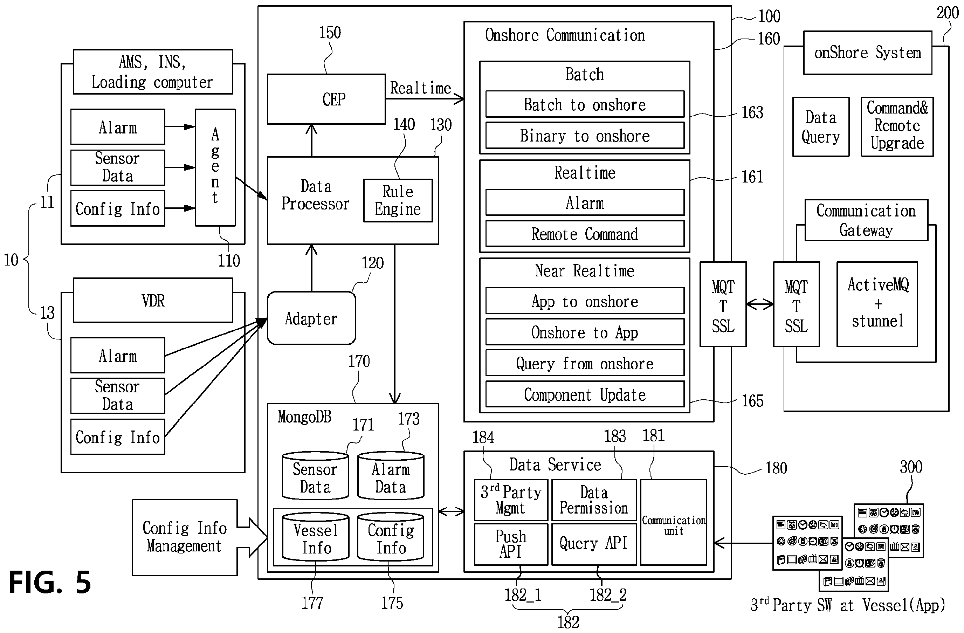

FIG. 5 is a schematic diagram showing the configuration of the vessel data integration system including a data service device according to an embodiment of the present disclosure.

In FIG. 5, equipment 10 is mounted in the vessel for special purposes, and collects various types of vessel data (raw data) generated in different formats within the vessel, i.e., alarm data, sensor data and configuration data. Additionally, the equipment 10 transmits the collected vessel data (raw data) to the vessel data integration system 100.

That is, the VDIP 100 collects vessel data through at least one equipment (e.g., AMS, INS, a loading computer, VDR, etc.) 10. As such, the VDIP 100 may directly collect vessel data, but may use the existing vessel equipment 10 as a gateway for data collection.

Here, vessel data generated in the vessel may cover various types including text, audio, image, video, etc.

The equipment 10 may be divided into first equipment 11 with a first vessel data conversion device 110 mounted thereon, and second equipment 13 with no first vessel data conversion device 110.

The first equipment 11 is where the first vessel data conversion device 110 is directly mounted, and collects vessel data in various formats from at least one sensor or device, and extracts Key and Value (Key:Value) by parsing the collected vessel data in various formats. Additionally, the first equipment 11 converts first vessel data in a non-standardized format, Key and Value (Key:Value), into a VDM based integrated vessel data format (VDM Path:Value) through the first vessel data conversion device 110, and transmits the converted integrated vessel data to the vessel data integration system 100.

That is, the first vessel data conversion device 110 converts the first vessel data in a non-standardized format, Key and Value (Key:Value), into an integrated vessel data format (VDM Path:Value), by replacing Key received from the first equipment 11 with VDM Path assigned based on VDM. Here, a connection operation for replacing Key extracted from raw data with VDM Path assigned based on VDM is a "mapping" operation, and through the mapping operation, the extracted Key is connected to the VDM Path to convert validity verified Value into an integrated vessel data format (VDM Path:Value).

When converting Key and Value (Key:Value) into a VDM based integrated vessel data format (VDM Path:Value) by replacing Key with VDM Path, it is necessary to verify the validity of Value of Key according to attribute of Data Attribute.

Data Attribute is attribute information of vessel data, and defines attributes that Value of vessel data should have. Accordingly, the validity of Value of Key extracted from raw data is verified according to attribute defined in Data Attribute corresponding to the corresponding vessel equipment.

The first equipment 11 may include an Alarm Monitoring System (AMS), an Integrated Navigation System (INS) and a loading computer.

The second equipment 13 converts vessel data collected in various formats into second vessel data in a standardized format (e.g., NMEA format), and transmits it to the vessel data integration system 100 using the UDP or in the form of a file.

The second equipment 13 may include a Voyage Data Recorder (VDR).

The first vessel data conversion device 110 is mounted in the first equipment 11, and converts validity verified Value into an integrated vessel data format (VDM Path:Value) by connecting Key in first vessel data in a non-standardized format outputted from the first equipment 11, i.e., vessel data in Key:Value format to VDM Path through a mapping operation.

The first vessel data conversion device 110 described above may be implemented as a program and installed on the first equipment 11.

The first vessel data conversion device 110 described above may be referred to as Agent.

The second vessel data conversion device 120 receives the second vessel data in a standardized format (e.g., NMEA format) from the second equipment 13 using the UDP or in the form of a file.

Additionally, the second vessel data conversion device 120 extracts Key and Value (Key:Value) by parsing the second vessel data received from the second equipment 13, and converts the extracted Key and Value (Key:Value) into a VDM based integrated vessel data format (VDM Path:Value) through a mapping operation.

The second vessel data conversion device 120 described above may be referred to as Adapter.

The integrated vessel data converted from the first vessel data conversion device 110 and the second vessel data conversion device 120 described above may be represented in JavaScript Object Notation (JSON) format.

When a data processing unit 130 receives the integrated vessel data from the first vessel data conversion device 110 or the second vessel data conversion device 120, the data processing unit 130 transmits the received integrated vessel data to Complex Event Processing (CEP) 150 based on tag information of the received integrated vessel data when the received data is data that is to be transmitted in real time like alarm data. Additionally, when the received data is data (e.g., sensor data, configuration data) that does not need to be transmitted in real time, the data processing unit 130 stores the received integrated vessel data in a storage DB 170.

The data processing unit 130 described above receives the integrated vessel data transmitted by the first vessel data conversion device 110 using a message queue.

A rule engine 140 manages a data validity validation rule necessary to verify the validity of the integrated vessel data received from the first vessel data conversion device 110 or the second vessel data conversion device 120. For example, the rule engine 140 may manage the minimum value (Min) and the maximum value (Max) for each sensor to verify the validity of sensor data.

Additionally, the rule engine 140 stores the integrated vessel data received from the first vessel data conversion device 110 or the second vessel data conversion device 120 in a corresponding DB provided in the storage DB 170. That is, sensor data is stored in a sensor data DB 171, alarm data is stored in an alarm data DB 173, and configuration data is stored in a configuration data DB 175.

The CEP 150 transmits data (e.g., alarm data) that is to be immediately transmission processed in real time among the integrated vessel data received from the data processing unit 130, in real time via satellite communication through an onshore communication unit 160.

Here, the communication protocol used for data transmission using satellite communication may include Message Queueing Telemetry Transport (MQTT), Constrained Application Protocol (CoAP), Mail, File Transfer Protocol (FTP), Simple Control Protocol (SCP), HyperText Transfer Protocol (HTTP), etc. Preferably, Internet of Things (loT) application protocol, MQTT, may be used.

Satellite communication services that can be used for data transmission may include 1) Fixed Satellite Service (FSS), 2) Mobile Satellite Service (MSS) and 3) Broadcast Satellite Service (BSS) according to the purpose of use, and may include 4) international satellite service (INTELSAT, INMARSAT), 5) regional satellite service (EUTELSAT, PANAMSAT) and 6) domestic satellite service (KORESAT, BS) according to the area. Additionally, Very Small Aperture Terminal (VSAT) that is a satellite communication service provided using small-diameter antennas and onshore equipment with low transmit output may be used. Preferably, Inmarsat FB (FleetBroadband), Inmarsat Global Express (Xpress) or Fleet Xpress may be used.

Additionally, data transmission by the onshore communication unit 160 may be performed through wireless communication protocols other than satellite communication. For example, Wireless LAN (WLAN), Wi-Fi, Wireless broadband (Wibro), World Interoperability for Microwave Access (Wimax), or general mobile communication methods such as High Speed Downlink Packet Access (HSDPA), 3^{rd} Generation (3G), Long Term Evolution (LTE), Long Term Evolution-Advanced (LTE-A), etc. may be used. Particularly, when the vessel including the vessel data integration system 100 is near or along the shore or close to the onshore management system 200, data transmission may be performed after changing to wireless communication, not satellite communication.

The onshore communication unit 160 is responsible for data transmission and reception between the vessel data integration system 100 and the onshore management system 200.

A real-time data transmission unit 161 of the onshore communication unit 160 is responsible for transmission processing of data (e.g., alarm data) that needs to be transmitted in real time.

A batch data transmission unit 163 is responsible for transmission processing of data stored in the storage DB 170 in a periodic time unit.

A remote data search unit 165 is responsible for searching for (retrieving) the corresponding vessel data in the storage DB 170 and transmitting it in response to a vessel data request from the shore.

The storage DB 170 stores and manages the integrated vessel data, and includes the sensor data DB 171 to store sensor data, the alarm data DB 173 to store alarm data, the configuration data DB 175 to store configuration data, and a vessel data DB 177 to store metadata and design data.

The above-described storage DB 170 stores the collected integrated vessel data for a predetermined period of time (e.g., 30 days) to allow history tracking on the shore and prevent data losses caused by network disconnection.

The vessel data stored in the above-described storage DB 170 is preferably stored according to the VDM system.

Additionally, the storage DB 170 may be implemented as MongoDB of Not only SQL (Structured Query Language) (NoSQL) to provide flexibility of data management.

A data service device 180 searches for (retrieves) data that a service requester 300 needs, in the storage DB 170, and provides it. The service requester 300 may specify and search for desired data using VDM Path based on VDM.

When the service requester 300 requests data using VDM Path, the data service device 180 may first identify if the service requester 300 has an access authority for the VDM Path based data range requested from the service requester 300, and as a result of identification, only when the service requester 300 has the access authority, the data service device 180 may search for the corresponding data and provide the search result to the service requester 300.

The data search method largely includes Query method and Push method.

The data service device 180 provides a data service Application Programming Interface (API) (Query API, Push API) to collect data that the service requester 300 needs.

The vessel data integration system configured as noted above collects vessel data in various formats made by different protocols, convert it into a systematic integrated vessel data format based on VDM, and provides the converted integrated vessel data to the onshore management system 200 or the service requester 300.

The data service device 180 described above includes a communication unit 181 and a search unit 182, and according to embodiments, may further include an identification unit 183 and a management unit 184.

The communication unit 181 is responsible for data transmission and reception with the service requester 300, and receives a vessel data request including VDM Path from the service requester 300, transmits it to the search unit 182, and in response to the vessel data request, receives the corresponding data retrieved from the search unit 182 and transmits it to the service requester 300.

The search unit 182 identifies, by the received VDM Path, vessel data desired by the service requester 300, searches for the corresponding data from the storage DB 170 in which vessel data is stored, and provides it to the service requester 300 through the communication unit 181.

The VDM Path hierarchically defines paths leading to each vessel data on VDM, and is used to identify each vessel data.

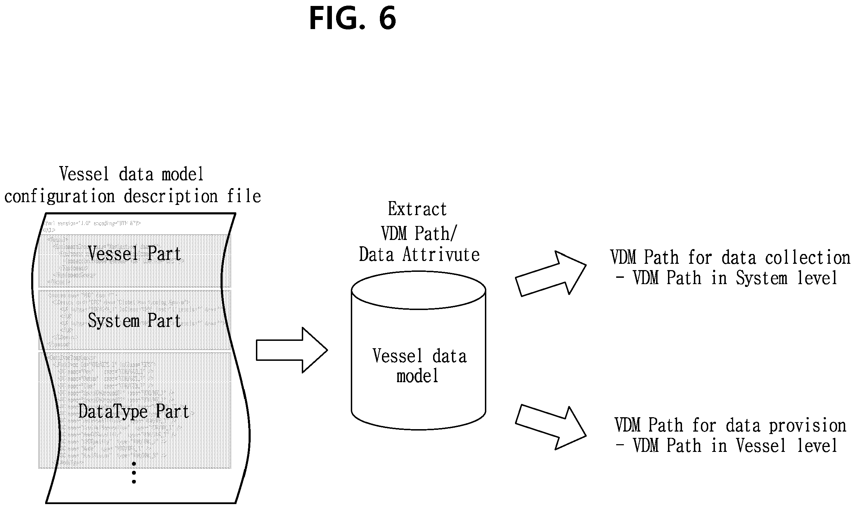

Here, the VDM Path used for vessel data search may be "VDM Path for service data provision" as described below in FIGS. 6 to 8.

The range of data searched by the search unit 182 may hierarchically change depending on the hierarchy level of the VDM Path.

The search unit 182 described above may include a first search unit 182_1 and a second search unit 182_2.

When the service requester 300 transmits the vessel data request using Push API, the first search unit 182_1 receives VDM Path based vessel data by Push method from the storage DB 170 and transmits it to the service requester 300.

When the service requester 300 transmits the vessel data request using Query API, the first search unit 182 extracts VDM Path based vessel data by Pull method from the storage DB 170 and provides it to the service requester 300.

The identification unit 183 identifies, based on the VDM Path, if the service requester 300 has an access authority for the data range specified by the VDM Path (e.g., an access authority for a particular layer or level defined by the VDM Path), and determines whether to approve the search.

When as a result of identification by the identification unit 183, the service requester 300 has the data access authority, the search unit 182 searches for the corresponding data and provides the search result to the service requester 300.

The management unit 184 supports registration and authentication of the service requester 300 to allow the service requester 300 to search for necessary vessel data in the storage DB 170 of the VDIP 100.

The service requester 300 described above is the means of providing various services (safe navigation, economical sailing, collision avoidance, engine monitoring, other additional/applied service, etc.) using vessel data, and may be referred to as other onboard S/W data service and a third-party service, and implemented in the form of software, mobile application (app), firmware or hardware, or their combinations.

For example, when the service requester 300 is implemented in the form of a mobile application (app) mounted on smart equipment, the service requester 300 may specify desired vessel data using VDM Path on the screen of the corresponding application, conduct a search, receive the corresponding data from the VDIP 100 and use it for a desired service.

Hereinafter, the process of managing (collecting, storing, providing) vessel data in various formats made by different protocols into a VDM based integrated vessel data format will be descried in more detail.

The VDM Path is used as an identifier that is unique to particular data in the vessel as previously described, and is also used as a routing rule for indicating particular vessel data on VDM.

Accordingly, in transmitting and receiving vessel data based on VDM, VDIP may identify each vessel data according to the VDM Path.

As shown in FIG. 6, the VDM Path may be divided into "VDM Path for equipment data collection" and "VDM Path for service data provision".

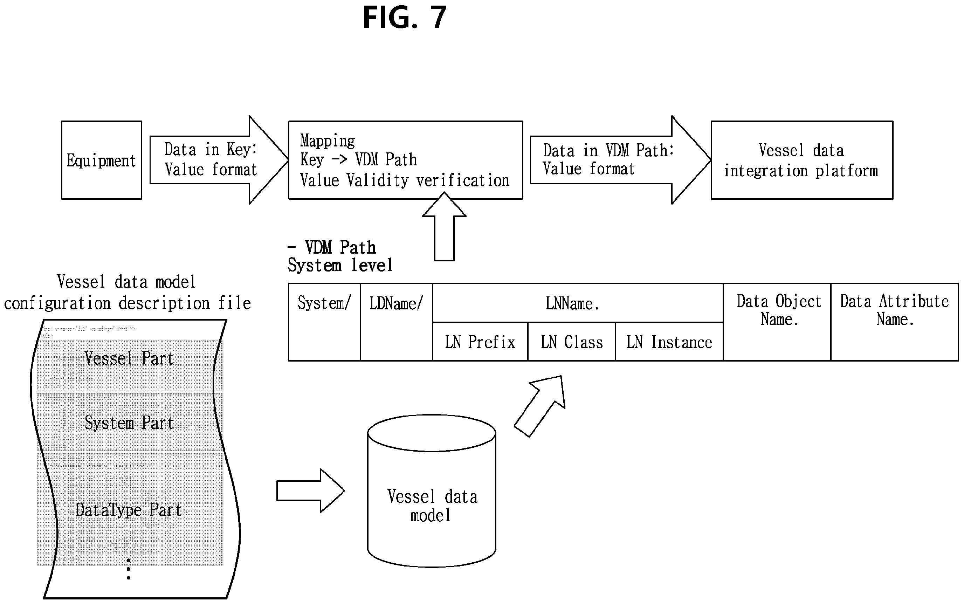

The "VDM Path for equipment data collection" reflects the levels of System Part and Data Type part as shown in FIG. 7.

The structure system of the "VDM Path for equipment data collection" is as follows (see FIG. 7).

```
       <System Name> / <Logical Device Name> / <Logical Node Name>.<Data
       Object Name>.[<Data Attribute Name>]+
```

Here, <Logical Node Name> is composed of <prefix>+<class>+<inst>, and + represents one or more repetitions.

The "VDM Path for equipment data collection" of the structure system described above may or may not include the prefix of System, Logical Device and Logical Node of System Part level if necessary.

Additionally, the "VDM Path for equipment data collection" may reflect all the levels of Vessel Part, System Part and Data Type Part.

In this case, the structure system of the "VDM Path for equipment data collection" is as follows.

```
       <Equipment Group Name> / <Equipment Name> / <Component Name> /
 <Logical Device Name> / <Logical Node Name>.<Data Object Name>.[<Data
 Attribute Name>]+
```

Here, <Logical Node Name> is composed of <prefix>+<class>+<inst>, and + represents one or more repetitions.

The "VDM Path for equipment data collection" of the structure system described above may or may not include the prefix of Equipment and Component of Vessel Part level and Logical Device and Logical Node of System Part level if necessary.

Meanwhile, the "VDM Path for service data provision" reflects the levels of Vessel Part, System Part and Data Type Part.

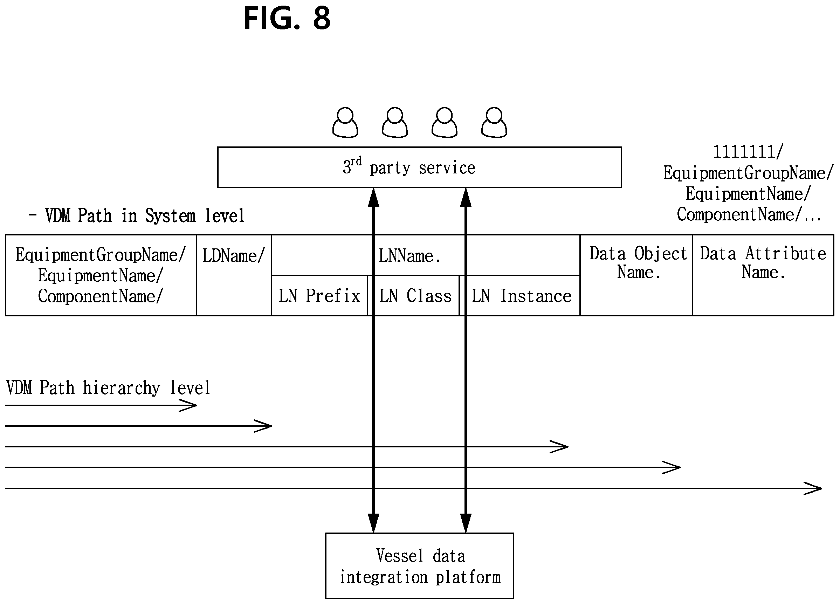

The structure system of the "VDM Path for service data provision" is as follows (see FIG. 8).

```
       <Equipment Group Name> / <Equipment Name> / <Component Name> /
 <Logical Device Name> / <Logical Node Name>.<Data Object Name>.[<Data
 Attribute Name>]+
```

Here, <Logical Node Name> is composed of <prefix>+<class>+<inst>, and + represents one or more repetitions.

The "VDM Path for service data provision" of the structure system described above may or may not include the prefix of Equipment and Component of Vessel Part level and Logical Device and Logical Node of System Part level if necessary.

As shown in FIG. 8, the range of data provided may hierarchically change depending on the hierarchy level of the VDM Path used for service data provision.

For example, when an input of 'Machinery/Machinery equipment/Diesel engine' as VDM Path is received from a 3^{rd} party service, all information associated with diesel engine is provided to the 3^{rd} party service, and when an input of 'Machinery/Machinery equipment/Diesel engine/Pump1' as VDM Path is received from a 3^{rd} party service, information associated with pump1 in the diesel engine is provided to the 3^{rd} party service.

Additionally, it is possible to manage a set of necessary VDM Paths to provide a particular customized service to a 3^{rd} party service.

When providing vessel data for an onshore service, a unique ID for identifying the vessel, vessel IMO number (e.g., 1111111), is added in front of the VDM Path.

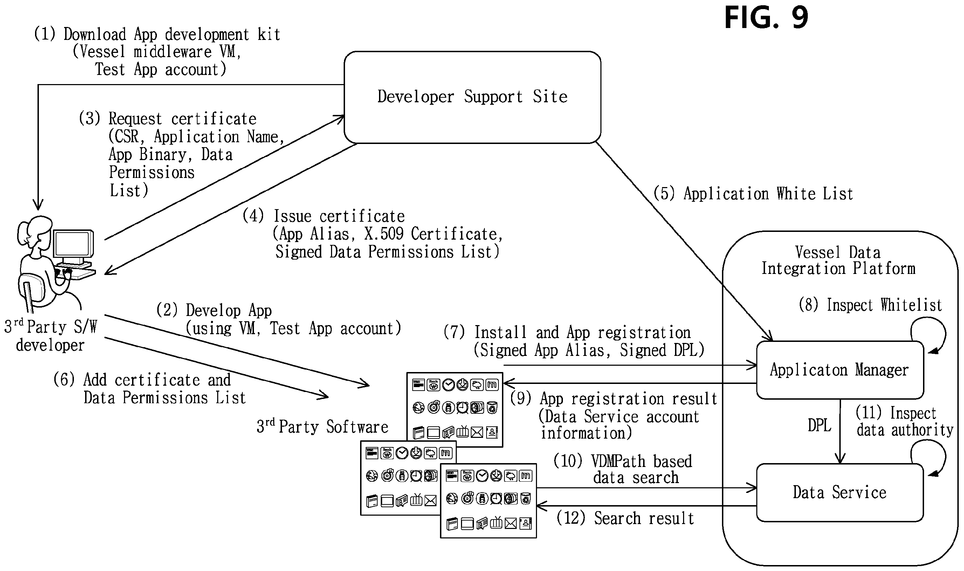

FIG. 9 is a diagram illustrating a process of registration and authentication of a developed third-party service in the vessel data integration system according to an embodiment of the present disclosure.

Vessel data collected/stored by VDIP through Agent or Adapter may be used in a third-party service (S/W).

The third-party service may search for (retrieve) necessary vessel data in VDIP, and for the third-party service to search for vessel data collected by VDIP and make use of it, the corresponding third-party service should be registered and authenticated in VDIP.

The process of registration and authentication of a developed third-party service in VDIP is as shown in FIG. 9.

First, (1) a third-party service developer accesses a developer support site, signs up, logs in, and downloads a kit necessary for third-party service development.

The kit includes VDIP emulator Virtual Machine (VM) to execute VDIP in development environment.

The VDIP emulator VM can be accessed through Secure Shell (SSH) and Web Console, and gets access through Secure Shell and performs the control of respective components of VDIP and VM termination, and performs the VDIP function control and main information monitoring function through Web Console.

The third-party service developer develops a third-party service by generating virtual vessel data through the VDIP emulator.

The VDIP emulator provides a test application account that allows free search of (retrieval) all data without registration as follows.
- App Alias
- Certificate: Private Key that will be used in a test application, Certificate and CA certificate
- DPL: Signed DPL that allows for search (retrieval) of all data
- Data service API access information
   (2) The third-party service developer develops a third-party service using the VDIP emulator running on the VDIP emulator VM and sample data generated by the VDIP emulator. In this instance, the range of target data for search (retrieval) is determined through a data service API provided by the VDIP. The range of target data for search (retrieval) may be determined by VDM Path. The VDIP may limit the searchable data range for each third-party service for security reasons.
   (3) The third-party service developer requests a registration process of the developed third-party service and Certificate, by submitting, to the developer support site, an execution file of the developed third-party service, X.509 Certificate Signing Request (CSR) and Data Permission List (DPL) of data desired to receive at VDIP. The submission method may include sending via e-mail, and it is necessary to send the name of the third-party service (Application Name) together.

As the above-described CRS includes Private Key that will be used in the developed third-party service, a care should be taken to prevent the Private Key from being deleted.

If Certificate was issued using CSR, but there is no Private Key, the third-party service registration operation should be performed again.

DPL is a file that specifies the data range that each third-party service can use, and this is for preventing excessive data access (search, retrieval) authority, thereby increasing the system stability, and reducing the security risk, and after investigation of authority requested from a developer support site manager in the third-party service registration process, when there is no problem, the third-party service registration is approved. Here, the data range that the third-party service can use is defined using VDM Path.
(4) The developer support site having received the third-party service execution file, CRS and DPL from the third-party service developer permits the corresponding third-party service to be installed in VDIP by registering the corresponding third-party service when there is no problem after investigation of the third-party service execution file, CRS and DPL. Additionally, Certificate (third-party service certificate) for CSR, topmost CA certificate and Signed DPL (encrypted version of DPL submitted by the third-party service developer to prevent forgery and falsification) are provided to the third-party service developer. The certificate issuance may be performed through an e-mail, and App Alias corresponding to the unique ID of the third-party service may be issued and transmitted together.
(5) Subsequently, the developer support site transmits a list of authenticated third-party services (App Aliases) to VDIP and stores it as a white list of installable third-party services. Accordingly, when the third-party service is installed in the vessel and gets access (third-party service registration request), VDIP may determine whether to permit by identifying if the third-party service is present in the white list.
(6) The third-party service developer adds authentication information received from the developer support site, i.e., Certificate (third-party service certificate), topmost CA certificate and Signed DPL, to the third-party service.
(7) Vessel manager installs the third-party service in the vessel, and inputs VDIP information (as VDIP runs in different environments for each vessel, IPs may be different).

When VDIP information is inputted into the third-party service installed in the vessel, the third-party service calls the data service API (e.g., third-party service registration API) to register itself in VDIP. Here, when the third-party service calls the data service API (e.g., third-party service registration API) for registering itself in VDIP, the third-party service needs to submit App Alias, Certificate and Signed DPL.
(8) VDIP identifies if the third-party service having requested registration after being installed in the vessel is included in the list of installable third-party services (white list), and when included, registers information associated with the corresponding third-party service in VDIP.
(9) Subsequently, VDIP provides the third-party service having succeeding in registration with authentication information (username, password, cunsumerKey, consumerSecret) necessary to call the data service API (Query API, Push API).

After the third-party service is installed in the vessel for the first time, the third-party service should request registration to VDIP only once, and thus it is desirable to continuously store the received authentication information, rather than removing it, and re-use at the time of next execution. Accordingly, when registering the third-party service, the VDIP investigates if authentication information is present in the third-party service having requested registration, and when present, regards the corresponding third-party service as being already registered, and when absent, performs a new registration process.
(10) The third-party service calls the data service API (e.g., Query API) for data search using the stored authentication information.

When the third-party service is registered, in case that the third-party service runs again, the stored authentication information is used directly without passing through the above-described processes of (7) to (9).

Data search (retrieval) can be conducted by specifying and searching for desired data through the grammar of VDM Path based on VDM.

Data search is divided into Query method and Push method, and target data for search includes sensor data, alarm data and configuration data.
(11) VDIP identifies if the VDM Path based data range requested from the third-party service is included in the DPL submitted in (3) the third-party service registration process.

As a result of identification, when the VDM Path based data range requested from the third-party service is not included in the DPL, an approval error occurs.
(12) As a result of identification, when the third-party service has the data access authority, the VDIP searches for the corresponding data and provides the search result to the third-party service.

The VDIP according to an embodiment of the present disclosure provides the following data service APIs to collect data that the third-party service needs.
- Third-party service registration API: API necessary to register the third-party service in VDIP for the first time
- Query API: API for searching for desired data by Pull method based on VDM Path
- Push API: API for receiving desired data from VDIP by Push method

Among the above-described APIs, other APIs except the third-party service registration API need authentication information.

The Query API is an API for collecting sensor, alarm and configuration data by Pull method, and may include API (latestQuery) for searching latest data, API (periodArrayQuery) for searching data by array type, API (periodJsonQuery) for searching for data by Json type, API (periodXMLQuery) for searching data by XML type, API (periodAllQuery) for searching data included in a preset period of time, API (binaryQuery) for searching binary data, for example, a radar image and audio records, API (getStructuredPath) for searching the structure of the VDM Path, API (datasetQuery) for searching datasets, API (createDataset) for generating a new dataset, and API (configDataQuery) for searching latest configuration data.

When calling the above-described Query API, VDIP information may be used as a URL prefix.

Meanwhile, collection of sensor and alarm data by Push method is performed by registering an event rule to enable CEP to process sensor and alarm data, loading the sensor and alarm data processed by CEP according to the event rule to the same queue as the event rule name, and collecting the sensor and alarm data loaded to the queue in real time.

Additionally, Push client accesses Push server while including authentication information of the data service API, and is then used to receive real-time data of sensor and alarm processed by CEP.

To use the above-described Push client, a third-party service dedicated event rule should be registered in CEP in advance.

As described above, the event rule for processing sensor and alarm data should be registered in CEP, and API about registration and deletion of the event rule are as follows.
- CEP event rule registration API for sensor data: register an event rule used to process sensor data in CEP
- CEP event rule deletion API for sensor data: delete an event rule for sensor data registered in CEP
- Sensor data search API: search single sensor data processed by CEP
- CEP event rule registration API for alarm data: register an event rule used to process alarm data in CEP
- CEP event rule deletion API for alarm data: delete an event rule for alarm data registered in CEP
- Alarm data search API: search single alarm data processed by CEP
- Number search API: search the number of sensor data or alarm data loaded to queue

When calling the above-described Push API, URL context indicating IP information of VDIP and the API type may be used.

These APIs are preferably implemented in the form of open API.

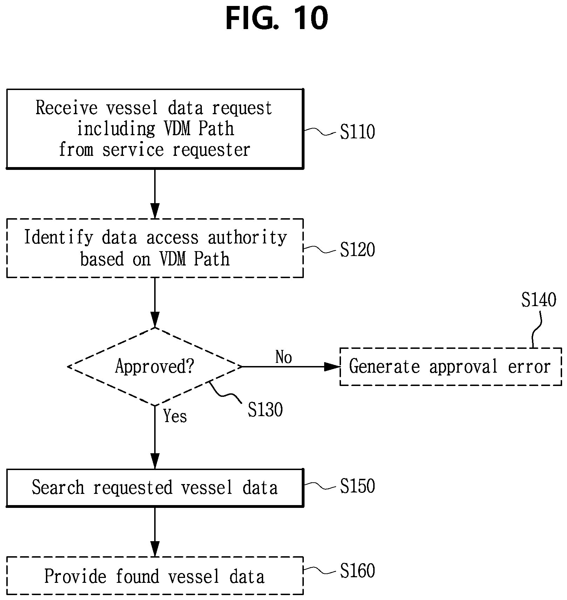

FIG. 10 is a processing diagram illustrating a vessel data service method in the vessel data integration system according to an embodiment of the present disclosure.

First, the data service device 180 receives a vessel data request including VDM Path from the service requester 300 (S110).

Subsequently, vessel data requested from the service requester 300 is identified using the VDM Path received through the above-described step S110, and the corresponding vessel data is searched for from the storage DB 170 in which vessel data is stored (S150).

As described above, the VDM Path hierarchically defines paths leading to each vessel data on VDM, and is used to identify each vessel data.

The VDM may include a vessel model, a system model and a data model. Here, the vessel model defines the hierarchical structure in the order of vessel, equipment group, equipment and component. The system model defines the hierarchical structure in the order of system, logical device and logical node for collecting vessel data. The data model defines the hierarchical structure in the order of data object about the structure of vessel data, and data attribute about attribute of vessel data.

The range of data that is searched for in the above-described step S150 may hierarchically change depending on the hierarchy level of the VDM Path.

The vessel data found in the above-described step S150 may be provided to the service requester 300 in response to the vessel data request received in the above-described step S110 (S160).

The data search method in the above-described step S150 largely includes Query method and Push method.

When the service requester 300 transmits the vessel data request of S110 using Query API, the data service device 180 extracts VDM Path based vessel data from the storage DB 170 by Pull method and transmits it to the service requester 300.

When the service requester 300 transmits the vessel data request of S110 using Push API, the data service device 180 receives VDM Path based vessel data from the storage DB 170 by Push method and transmits it to the service requester 300.

Before performing the search operation in the above-described step S150, the data service device 180 identifies if the corresponding service requester 300 has an access authority for the data range specified by the VDM Path of S110 (S120) first, and determines whether to approve the search (S130).

As a result of identification in the above-described step S120, when the service requester 300 has a data access authority, the search for the VDM Path based data range requested from the service requester 300 is approved (S130), search for the corresponding data is conducted (S150), and the search result is provided to the service requester 300 (S160).

As a result of identification in the above-described step S120, when the service requester 300 does not have a data access authority, for example, when vessel data desired by the service requester 300 is outside the data range that can be accessed by the VDM Path received in S110, an approval error is generated (S130, S140).

Those having ordinary skill in the technical field pertaining to the present disclosure will appreciate that various modifications and changes may be made without departing from the essential nature of the present disclosure. Additionally, the embodiments disclosed in the specification and drawings are only a particular embodiment presented to easily describe the disclosure and help the understanding of the present disclosure, but not intended to limit the scope of the present disclosure. Therefore, it should be interpreted that the scope of the present disclosure cover the embodiments disclosed herein as well as all modified or changed forms derived based on the technical spirit of the present disclosure.

### [Industrial Applicability]

According to the vessel data integration system of the present disclosure and the vessel comprising the same, necessary vessel data may be efficiently provided to various third-party services.

## Claims

1. A data service method in a vessel data integration system, comprising:
receiving a vessel data request including a Vessel Data Model Path (VDM Path) from a service requester; and
searching for the requested vessel data from a database in which vessel data is stored, based on the VDM Path.

2. The data service method in the vessel data integration system according to claim 1, wherein the VDM Path hierarchically defines paths leading to each vessel data on a Vessel Data Model (VDM), and
each vessel data is identified by the VDM Path.

3. The data service method in the vessel data integration system according to claim 1, wherein a data range in which to perform the search hierarchically changes depending on hierarchy level of the VDM Path.

4. The data service method in the vessel data integration system according to claim 1, further comprising:
identifying if the service requester has an access authority for a data range specified by the VDM Path,
wherein as a result of the identification, when the service requester has the access authority, performing the search.

5. The data service method in the vessel data integration system according to claim 2, wherein the VDM is generated by combining a vessel model, a system model and a data model,
the vessel model defines hierarchical structure in an order of vessel, equipment group, equipment and component,
the system model defines hierarchical structure in an order of system, logical device and logical node for collecting vessel data, and
the data model defines hierarchical structure in an order of data object about structure of vessel data and data attribute about attribute of vessel data.

6. The data service method in the vessel data integration system according to claim 5, wherein the VDM Path includes at least one name of equipment group, equipment, component, logical device, logical node, data object and data attribute.

7. The data service method in the vessel data integration system according to claim 6, wherein the VDM Path has a sequential arrangement of at least one name of equipment group, equipment, component, logical device, logical node, data object and data attribute.

8. The data service method in the vessel data integration system according to claim 1, further comprising:
providing the found vessel data to the service requester in response to the vessel data request.

9. The data service method in the vessel data integration system according to claim 1, wherein the searching comprises:
in case of the vessel data request using a Query Application Programming Interface (API), extracting the requested vessel data by a Pull method, and
in case of the vessel data request using a Push API, receiving the requested vessel data by a Push method.

10. A data service device in a vessel data integration system, comprising:
a communication unit to receive a vessel data request including a Vessel Data Model Path (VDM Path) from a service requester; and
a search unit to search for the requested vessel data from a database in which vessel data is stored, based on the VDM Path.

11. The data service device in the vessel data integration system according to claim 10, wherein the VDM Path hierarchically defines paths leading to each vessel data on a Vessel Data Model (VDM), and
each vessel data is identified by the VDM Path.

12. The data service device in the vessel data integration system according to claim 10, wherein the search unit hierarchically changes a data range in which to perform the search, depending on hierarchy level of the VDM Path.

13. The data service device in the vessel data integration system according to claim 10, further comprising:
an identification unit to identify if the service requester has an access authority for a data range specified by the VDM Path,
wherein as a result of the identification by the identification unit, when the service requester has the access authority, the search unit performs the searching operation.
